# EUROPÄISCHE PATENTANMELDUNG

(11) **EP 4 576 022 A1**
(43) Veröffentlichungstag der Anmeldung: **25.06.2025**
(21) Anmeldenummer: 23217564.6
(22) Anmeldetag: 18.12.2023
(51) Int. Cl.: G06V 20/56, G06N 3/08, G06N 3/04

(54) **COMPUTER-IMPLEMENTIERTES VERFAHREN UND SYSTEM ZUR OBJEKTDETEKTION UNTER VERWENDUNG EINES GENERATIVEN DEEP-LEARNING-MODELLS SOWIE TRAININGSVERFAHREN**

(71) Anmelder: dSPACE GmbH, 33102 Paderborn (DE)
(72) Erfinder: Bhatt, Hitarth, 33102 Paderborn (DE)

(57) **Zusammenfassung**

Die Erfindung betrifft ein computer-implementiertes Verfahren zum Bereitstellen eines generativen Deep-Learning-Modells (A) zur Objektdetektion, mit den Schritten: Bereitstellen (S1) eines auf Basis natürlichsprachlicher Daten vortrainierten generativen Deep-Learning-Modells (A), insbesondere eines vortrainierten generativen Transformer-Modells, und Nachtrainieren (S2) des generativen Deep-Learning-Modells (A) unter Verwendung eines auf Sensordaten (SD) eines Fahrzeugumfeldes basierenden Trainingsdatensatzes (TD) von Einzelbildern (10), insbesondere Zeitreihenbildern und/oder Punktwolken (12). Die Erfindung betrifft ferner ein computer-implementiertes Verfahren zur Objektdetektion unter Verwendung eines generativen Deep-Learning-Modells, ein System zum Bereitstellen eines generativen Deep-Learning-Modells zur Objektdetektion sowie ein System zur Objektdetektion unter Verwendung eines generativen Deep-Learning-Modells.

## Beschreibung

Die vorliegende Erfindung betrifft ein computer-implementiertes Verfahren zum Bereitstellen eines generativen Deep-Learning-Modells zur Objektdetektion. Des Weiteren betrifft die Erfindung ein computer-implementiertes Verfahren zur Objektdetektion unter Verwendung eines generativen Deep-Learning-Modells.

Die Erfindung betrifft ferner ein System zum Bereitstellen eines generativen Deep-Learning-Modells zur Objektdetektion. Darüber hinaus betrifft die Erfindung ein System zur Objektdetektion unter Verwendung eines generativen Deep-Learning-Modells.

Die Erfindung betrifft des Weiteren ein Computerprogramm mit Programmcode, um das erfindungsgemäße Verfahren durchzuführen sowie einen computerlesbaren Datenträger mit Programmcode eines Computerprogramms, um das erfindungsgemäße Verfahren durchzuführen, wenn das Computerprogramm auf einem Computer ausgeführt wird.

### Stand der Technik

Algorithmen zur Objektdetektion für das hochautomatisierte Fahren können mithilfe diverser Trainingsverfahren bereitgestellt werden.

EP 3446281 A1 offenbart ein Trainingsverfahren zur Objekterkennung, wobei das Trainingsverfahren ein Bereitstellen mindestens eines Trainingsbildes in Draufsicht, Ausrichten eines Trainingsobjekts in dem Trainingsbildes entlang einer vorgegebenen Richtung, Annotieren mindestens eines Trainingsobjekts aus dem mindestens einen Trainingsbild unter Verwendung eines vordefinierten Annotierungsschemas, Extrahieren mindestens eines Merkmalsvektors zur Beschreibung des Inhalts des mindestens einen gelabelten Trainingsobjekts und mindestens eines Merkmalsvektors zur Beschreibung mindestens einer Hintergrundszene, und Trainieren eines Klassifikatormodells basierend auf den extrahierten Merkmalsvektoren umfasst.

Herkömmlicherweise wird ein neuronales Netz zur Objektdetektion daher wie auf einem gewöhnlichen Datensatz, der aus diversen Einzelframes besteht, trainiert. Um im Rahmen der Objektdetektion eine zufriedenstellende Leistung aufzuweisen bedarf es herkömmlicherweise eines Annotierens bzw. Labelns des Trainingsdatensatzes. Der Schritt des Annotierens ist hierbei sehr ressourcenaufwendig, gleich ob die Durchführung manuell oder zumindest teilweise automatisiert erfolgt.

Demzufolge besteht ein Bedarf, bestehende Verfahren zur Objektdetektion für das hochautomatisierte Fahren dahingehend zu verbessern, dass ein Trainingsaufwand des Algorithmus maschinellen Lernens reduziert wird.

Es ist daher Aufgabe der Erfindung, ein verbessertes Verfahren und System zum Bereitstellen eines Algorithmus maschinellen Lernens zur Objektdetektion vorzusehen, welches einen geringeren Trainingsaufwand aufweist.

### Offenbarung der Erfindung

Die Aufgabe wird erfindungsgemäß durch ein computer-implementiertes Verfahren zum Bereitstellen eines generativen Deep-Learning-Modells zur Objektdetektion mit den Merkmalen des Patentanspruchs 1 gelöst.

Die Aufgabe wird erfindungsgemäß überdies durch ein computer-implementiertes Verfahren zur Objektdetektion unter Verwendung eines generativen Deep-Learning-Modells mit den Merkmalen des Patentanspruchs 6 gelöst.

Die Aufgabe wird erfindungsgemäß des Weiteren durch ein System zum Bereitstellen eines generativen Deep-Learning-Modells zur Objektdetektion mit den Merkmalen des Patentanspruchs 12 gelöst.

Darüber hinaus wird die Aufgabe durch ein System zur Objektdetektion unter Verwendung eines generativen Deep-Learning-Modells mit den Merkmalen des Patentanspruchs 13 gelöst.

Die Aufgabe wird erfindungsgemäß ferner durch ein Computerprogramm mit den Merkmalen des Patentanspruchs 14 sowie einen computerlesbaren Datenträger mit den Merkmalen des Patentanspruchs 15 gelöst.

Die Erfindung betrifft ein computer-implementiertes Verfahren zum Bereitstellen eines generativen Deep-Learning-Modells zur Objektdetektion, umfassend ein Bereitstellen eines auf Basis natürlichsprachlicher Daten vortrainierten generativen Deep-Learning-Modells, insbesondere eines vortrainierten generativen Transformer-Modells.

Das Verfahren umfasst ferner ein Nachtrainieren des generativen Deep-Learning-Modells unter Verwendung eines auf Sensordaten eines Fahrzeugumfeldes basierenden Trainingsdatensatzes von Einzelbildern und/oder Punktwolken.

Die Erfindung betrifft des Weiteren ein computer-implementiertes Verfahren zur Objektdetektion unter Verwendung eines generativen Deep-Learning-Modells. Das Verfahren umfasst ein Bereitstellen eines auf Sensordaten eines Fahrzeugumfeldes basierenden ersten Datensatzes umfassend eine Mehrzahl von Einzelbildern, insbesondere Zeitreihenbildern und/oder Punktwolken.

Darüber hinaus umfasst das Verfahren ein Anwenden des erfindungsgemäß trainierten generativen Deep-Learning-Modells, insbesondere eines generativen Transformer-Modells auf den ersten Datensatz umfassend die Mehrzahl von Einzelbildern und/oder Punktwolken zur Objektdetektion.

Das Verfahren umfasst überdies ein Ausgeben eines, ein Ergebnis der Objektdetektion repräsentierenden, insbesondere annotierte Objekte in der Mehrzahl von Einzelbildern und/oder Punktwolken aufweisenden zweiten Datensatzes.

Die Erfindung betrifft ferner ein computer-implementiertes Verfahren zum Validieren einer automatisierten Fahrfunktion eines Kraftfahrzeugs unter Verwendung des Ergebnisses des erfindungsgemäßen computer-implementierten Verfahrens zur Objektdetektion.

Die Erfindung betrifft ferner ein System zum Bereitstellen eines generativen Deep-Learning-Modells zur Objektdetektion. Das System umfasst eine erste Trainingsberechnungseinheit, welche konfiguriert ist, ein auf Basis natürlichsprachlicher Daten vortrainiertes generatives Deep-Learning-Modell, insbesondere ein vortrainiertes generatives Transformer-Modell bereitzustellen.

Darüber hinaus umfasst das System eine zweite Trainingsberechnungseinheit, welche konfiguriert ist, das generative Deep-Learning-Modell unter Verwendung eines auf Sensordaten eines Fahrzeugumfeldes basierenden Trainingsdatensatzes von Einzelbildern und/oder Punktwolken nachzutrainieren.

Die Erfindung betrifft des Weiteren ein System zur Objektdetektion unter Verwendung eines generativen Deep-Learning-Modells. Das System umfasst eine Datenbereitstellungseinheit, welche konfiguriert ist, einen auf Sensordaten eines Fahrzeugumfeldes basierenden ersten Datensatz umfassend eine Mehrzahl von Einzelbildern, insbesondere Zeitreihenbildern und/oder Punktwolken bereitzustellen.

Darüber hinaus umfasst das System eine Berechnungseinheit, welche konfiguriert ist, ein nach einem der Ansprüche 1 bis 5 trainiertes generatives Deep-Learning-Modell, insbesondere ein generatives Transformer-Modell auf den ersten Datensatz umfassend die Mehrzahl von Einzelbildern und/oder Punktwolken zur Objektdetektion anzuwenden, und eine Datenausgabeeinheit, welche konfiguriert ist, einen, ein Ergebnis der Objektdetektion repräsentierenden, insbesondere annotierte Objekte in der Mehrzahl von Einzelbildern und/oder Punktwolken aufweisenden zweiten Datensatz auszugeben.

Die Erfindung betrifft ferner ein Computerprogramm mit Programmcode, um das erfindungsgemäße Verfahren zur Objektdetektion durchzuführen, wenn das Computerprogramm auf einem Computer ausgeführt wird sowie einen computerlesbaren Datenträger mit Programmcode eines Computerprogramms, um das erfindungsgemäße Verfahren durchzuführen, wenn das Computerprogramm auf einem Computer ausgeführt wird.

Algorithmen des maschinellen Lernens basieren darauf, dass Verfahren der Statistik verwendet werden, um eine Datenverarbeitungsanlage derart zu trainieren, dass diese eine bestimmte Aufgabe ausführen kann, ohne dass sie ursprünglich explizit hierzu programmiert worden ist. Das Ziel des maschinellen Lernens besteht dabei darin, Algorithmen zu konstruieren, die aus Daten lernen und Vorhersagen treffen können. Diese Algorithmen erstellen mathematische Modelle, mit denen beispielsweise Daten klassifiziert, im vorliegenden Fall Objekte detektiert werden können.

Unter Bilddaten werden dabei Daten verstanden, welche mit Hilfe eines speziellen Programmes als Bild beziehungsweise Grafik wiedergegeben werden können. Dass ein Objekt in Bilddaten repräsentiert ist, bedeutet ferner, dass die entsprechenden Bilddaten das Objekt zeigen, beziehungsweise eine Darstellung des Objektes aufweisen.

Bilddaten können beispielsweise Videobilddaten oder Radarbilddaten sein. Punktwolkedaten können beispielsweise LiDAR-Punktwolkedaten sein. Ein weiterer möglicher Datentyp sind Positionsdaten eine GPS-Sensors.

Eine Idee der vorliegenden Erfindung ist es, ein auf einem großen Datensatz vortrainiertes generatives Deep-Learning-Modell zu verwenden, welches bereits in der Lage ist, Sensordaten eines fahrzeuggebundenen Umfelderfassungssensors zu verarbeiten.

Generative Deep-Learning-Modelle, die auf Basis natürlichsprachlicher Daten trainiert sind, weisen die Eigenschaft auf, das nächste Token einer entsprechenden Anfrage vorherzusagen. Ein Token kann im Rahmen einer natürlichsprachlichen Anfrage z.B. ein Buchstabe sein. Aus diesem Token werden sodann Kontext-Vektoren berechnet. Diese repräsentieren nicht allein die Buchstabenfolge, sondern auch ihre Position im Text und ihren Zusammenhang.

Dieses Prinzip ist ebenfalls auf Sensordaten anwendbar, wobei jeweilige Bildpixel oder Punkte einer Punktwolke als Token betrachtet werden können.

Bei einem Bild handelt es sich hierbei um eine Liste von Punkten mit X- und Y-Werten. Bei einer Punktwolke handelt es sich um eine Liste von Punkten mit X-, Y- und Z-Werten. Somit ist das Modell in der Lage, Pixel bzw. Punkte zu prädizieren.

Das Nachtrainieren des generativen Deep-Learning-Modells erfolgt in vorteilhafter Weise unter Verwendung eines in Relation zu den initialen Trainingsdaten zum Trainieren des generativen Deep-Learning-Modells vergleichsweise kleinen Datensatzes von Sensordaten des Fahrzeugumfeldes. So kann das Modell unter Verwendung des eine geringere Größe aufweisenden Datensatzes von Sensordaten für eine jeweilige Aufgabe, beispielsweise eine Erkennung von Verkehrszeichen, nachtrainiert werden.

Bei dem Nachtrainieren können z.B. Teile des generativen Deep-Learning-Modells eingefroren und nicht mittrainiert werden. Die nachfolgenden Teile werden sodann basierend auf dem Datensatz von Sensordaten neu trainiert.

Die Kombination aus dem vortrainierten Modell und dem nachtrainierten Modell kann so als neues Modell zur Inferenz genutzt werden.

Die wesentlichen Vorteile liegen darin, dass es die Trainingsstrategie erlaubt, ein Basismodell auf großen, diversen, nicht sequentiellen Datensätzen zu trainieren und durch ein kleines Modell für die Anwendung auf sequentiellen Daten zu erweitern und zu optimieren.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der Trainingsdatensatz Einzelbilder und/oder Punktwolken einer vorgegebenen Fahrsituation und/oder einer vorgegebenen Umweltbedingung des Fahrzeugumfeldes aufweist.

Hierdurch ist es in vorteilhafter Weise möglich, dass vortrainierte Modell mit spezifischen Daten der vorgegebenen Fahrsituation und/oder der vorgegebenen Umweltbedingung des Fahrzeugumfelds nachzutrainieren, um eine verbesserte Performanz des Modells bezüglich einer spezifischen Objektdetektionsaufgabe im Fahrzeugumfeld zu erreichen.

Gemäß einer weiteren bevorzugten Weiterbildung der Erfindung ist vorgesehen, dass die vorgegebene Fahrsituation ein urbanen Verkehrsumfeld, ein außerstädtisches Verkehrsumfeld und/oder eines Autobahn-Verkehrsumfeld umfasst und wobei die vorgegebene Umweltbedingung eine Uhrzeit, eine Wetterbedingung und/oder eine Fahrbahnbedingung umfasst.

Somit kann das Modell in vorteilhafter Weise unter Verwendung von Fahrsituationsdaten jeweiliger Verkehrsumfelder trainiert werden. Hierdurch kann Beispielsweise ein Modell ausschließlich mit Fahrsituationsdaten eines urbanen Verkehrsumfelds trainiert werden, sodass dieses Modell in der Inferenz ausschließlich in einem urbanen Verkehrsumfeld eingesetzt wird. Weitere Modelle können beispielsweise jeweils für ein außerstädtisches Verkehrsumfeld und/oder ein Autobahn-Verkehrsumfeld sowie jeweilige Umweltbedingungen trainiert werden.

Auch können bei dem Training länderspezifische Daten des jeweiligen Verkehrsumfeldes in Betracht gezogen bzw. trainiert werden. Länderspezifische Daten können z.B. länderspezifische Verkehrszeichen, eine Fahrbahnbreite sowie länderspezifische Fahrbahnmarkierungen sein.

Gemäß einer weiteren bevorzugten Weiterbildung der Erfindung ist vorgesehen, dass der Trainingsdatensatz zum Nachtrainieren (S2) des generativen Deep-Learning-Modells (A) zwischen 50 und 500 Einzelbilder (10) und/oder Punktwolken (12), insbesondere zwischen 100 und 300 Einzelbilder (10) und/oder Punktwolken (12) aufweist.

Aufgrund der Verwendung einer sehr geringen Anzahl von Einzelbildern (10) und/oder Punktwolken (12) zum Nachtrainieren des bereits vortrainierten Modells ist ein Training zum Anpassen des Modells an eine jeweilige Objektdetektionsaufgabe einer automatisierten Fahrfunktion mit sehr geringem Aufwand realisierbar.

Gemäß einer weiteren bevorzugten Weiterbildung der Erfindung ist vorgesehen, dass der Trainingsdatensatz (TD) zum Nachtrainieren (S2) des generativen Deep-Learning-Modells (A) nicht annotierte Sensorrohdaten aufweist.

Da im Rahmen des Trainings von generativen Deep-Learning-Modellen keine annotierten Daten erforderlich sind kann hierdurch in vorteilhafter Weise ein erheblicher Effizienzgewinn beim Training des Modells gegenüber herkömmlichen Trainingsverfahren anderer Modelle erreicht werden.

Gemäß einer weiteren bevorzugten Weiterbildung der Erfindung ist vorgesehen, dass das generative Deep-Learning-Modell eine Vorhersage einer Position der Fahrbahnmarkierungen, Verkehrszeichen und/oder Verkehrsteilnehmern für einen vorgegebenen, zukünftigen Zeitpunkt durchführt.

Somit kann durch das Modell in vorteilhafter Weise nicht nur eine statische Objektdetektion, sondern ebenfalls eine dynamische Objektdetektion durchgeführt werden, bei welcher die Position jeweilige Objekte in zukünftigen Frames bzw. Zeitreihenbildern vorhergesagt werden kann. In diesem Zusammenhang kann beispielsweise eine Geschwindigkeit eines Ego-Fahrzeugs, welches den Bezugspunkt für die jeweiligen Zeitreihenbilder darstellt, sowie eine Geschwindigkeit anderer Verkehrsteilnehmer mit in Betracht gezogen werden.

Gemäß einer weiteren bevorzugten Weiterbildung der Erfindung ist vorgesehen, dass der vorgegebene, zukünftige Zeitpunkt relativ zum Erfassungszeitpunkt des jeweiligen Einzelbildes und/oder der jeweiligen Punktwolke des Fahrzeugumfeldes festgelegt ist.

Der zukünftige Zeitpunkt gibt dabei an, in wie vielen zukünftigen Frames bzw. Einzelbildern oder Punktwolken ein entsprechendes Objekt detektiert werden soll.

Gemäß einer weiteren bevorzugten Weiterbildung der Erfindung ist vorgesehen, dass das generative Deep-Learning-Modell multimodale Eingabedaten, insbesondere Text- und Bilddaten, verarbeitet und multimodale Ausgabedaten, insbesondere Text- und/oder Bilddaten ausgibt.

Für die Objektdetektionsaufgabe ist es hierbei erforderlich, dass das Modell neben den Bild- bzw. Punktwolkedaten zumindest initial Textdaten als Eingabe erhält, welche die entsprechende Objektdetektionsaufgabe spezifizieren.

Ferner ist das Modell in der Lage, sowohl Textdaten als auch Bild- bzw. Punktwolkedaten auszugeben. Beispielsweise kann das Modell eine Bounding-Box um ein detektiertes Objekt setzen oder die Koordinaten des detektierten Objekts im Bild angeben. Ferner kann das Modell weitere Metadaten bezüglich detektierter Objekte ausgeben wie z.B. eine Geschwindigkeit anderer Verkehrsteilnehmer. Überdies kann das Modell beispielsweise Fahrbahnmarkierungen und/oder eine Fahrspur des Ego-Fahrzeugs in den Ausgabebild- bzw. Punktwolkedaten kennzeichnen.

Die hierin beschriebenen Merkmale des computer-implementierten Verfahrens zum Bereitstellen eines Algorithmus maschinellen Lernens zur Objektdetektion sind ebenso auf das System zum Bereitstellen eines Algorithmus maschinellen Lernens zur Objektdetektion und umgekehrt anwendbar.

Ebenso sind die hierin beschriebenen Merkmale des computer-implementierten Verfahrens zur Objektdetektion durch einen Algorithmus maschinellen Lernens auf das System zur Objektdetektion durch einen Algorithmus maschinellen Lernens und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig.1: ein Ablaufdiagramm eines computer-implementierten Verfahrens zum Bereitstellen eines generativen Deep-Learning-Modells zur Objektdetektion gemäß einer bevorzugten Ausführungsform der Erfindung;
- Fig.2: ein Ablaufdiagramm eines computer-implementierten Verfahrens zur Objektdetektion unter Verwendung eines generativen Deep-Learning-Modells gemäß der bevorzugten Ausführungsform der Erfindung;
- Fig.3: eine schematische Darstellung eines Systems zum Bereitstellen eines generativen Deep-Learning-Modells zur Objektdetektion gemäß der bevorzugten Ausführungsform der Erfindung; und
- Fig.4: eine schematische Darstellung eines Systems zur Objektdetektion unter Verwendung eines generativen Deep-Learning-Modells gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

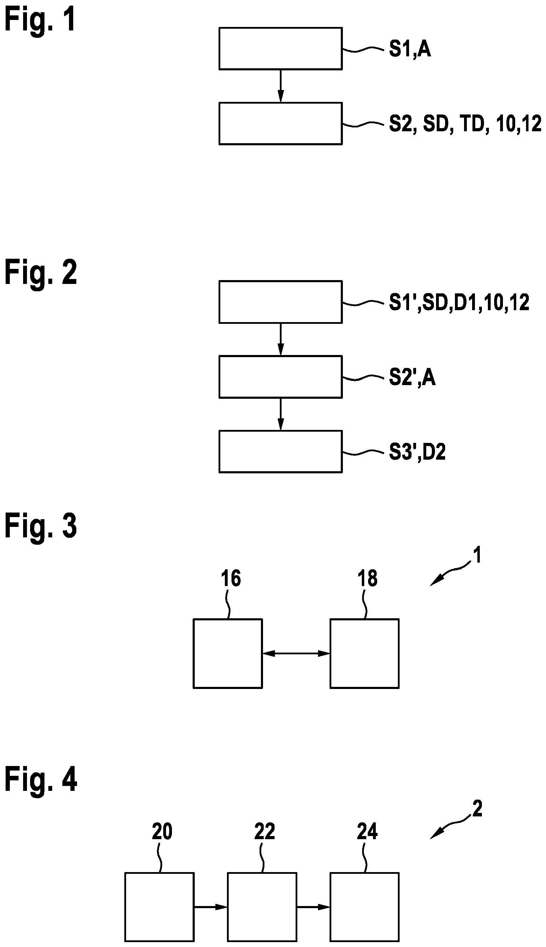

Das ist Fig.1 gezeigte computer-implementierte Verfahren zum Bereitstellen eines generativen Deep-Learning-Modells zur Objektdetektion gemäß einer bevorzugten Ausführungsform der Erfindung umfasst ein Bereitstellen S1 eines auf Basis natürlichsprachlicher Daten vortrainierten generativen Deep-Learning-Modells A, insbesondere eines vortrainierten generativen Transformer-Modells.

Des Weiteren umfasst das Verfahren ein Nachtrainieren S2 des generativen Deep-Learning-Modells A unter Verwendung eines auf Sensordaten SD eines Fahrzeugumfeldes basierenden Trainingsdatensatzes TD von Einzelbildern 10, insbesondere Zeitreihenbildern und/oder Punktwolken 12.

Der Trainingsdatensatz TD weist Einzelbilder 10 und/oder Punktwolken 12 einer vorgegebenen Fahrsituation und/oder einer vorgegebenen Umweltbedingung des Fahrzeugumfeldes auf. Die vorgegebene Fahrsituation umfasst ein urbanes Verkehrsumfeld, ein außerstädtisches Verkehrsumfeld und/oder ein Autobahn-Verkehrsumfeld. Die vorgegebene Umweltbedingung umfasst eine Uhrzeit, beispielsweise eine Tages- oder Nachtzeit sowie eine Wetterbedingung und/oder eine Fahrbahnbedingung, beispielsweise einen Reibwert der Fahrbahn.

Der Trainingsdatensatz TD zum Nachtrainieren S2 des generativen Deep-Learning-Modells A weist vorzugsweise zwischen 50 und 500 Einzelbilder 10 und/oder Punktwolken 12, insbesondere zwischen 100 und 300 Einzelbilder 10 und/oder Punktwolken 12 auf.

Der Trainingsdatensatz TD zum Nachtrainieren S2 des generativen Deep-Learning-Modells A weist ferner nicht annotierte Sensorrohdaten auf.

Fig.2 zeigt ein Ablaufdiagramm eines computer-implementierten Verfahrens zur Objektdetektion unter Verwendung eines generativen Deep-Learning-Modells gemäß der bevorzugten Ausführungsform der Erfindung;
Das Verfahren umfasst ein Bereitstellen S1' eines auf Sensordaten SD eines Fahrzeugumfeldes basierenden ersten Datensatzes D1 umfassend eine Mehrzahl von Einzelbildern 10, insbesondere Zeitreihenbildern und/oder Punktwolken 12.

Des Weiteren umfasst das Verfahren ein Anwenden S2' des erfindungsgemäß trainierten generativen Deep-Learning-Modells A, insbesondere eines generativen Transformer-Modells auf den ersten Datensatz D1 umfassend die Mehrzahl von Einzelbildern 10 und/oder Punktwolken 12 zur Objektdetektion.

Das Verfahren umfasst darüber hinaus ein Ausgeben S3` eines, ein Ergebnis der Objektdetektion
repräsentierenden, insbesondere annotierte Objekte in der Mehrzahl von Einzelbildern 10 und/oder Punktwolken 12 aufweisenden zweiten Datensatzes D2.

Das generative Deep-Learning-Modell A führt basierend auf der Mehrzahl bereitgestellter Einzelbilder 10 und/oder Punktwolken 12 eine Detektion von Fahrbahnmarkierungen, Verkehrszeichen und/oder Verkehrsteilnehmern durch.

Ferner oder alternativ führt das generative Deep-Learning-Modell A eine Vorhersage einer Position der Fahrbahnmarkierungen, Verkehrszeichen und/oder Verkehrsteilnehmern für einen vorgegebenen, zukünftigen Zeitpunkt durch. Der vorgegebene, zukünftige Zeitpunkt ist dabei relativ zum Erfassungszeitpunkt des jeweiligen Einzelbildes und/oder der jeweiligen Punktwolke 12 des Fahrzeugumfeldes festgelegt.

Das generative Deep-Learning-Modell A verarbeitet multimodale Eingabedaten, insbesondere Text- und Bilddaten. Überdies gibt das generative Deep-Learning-Modell A multimodale Ausgabedaten, insbesondere Text- und/oder Bilddaten.

Fig.3 zeigt eine schematische Darstellung eines Systems 1 zum Bereitstellen eines generativen Deep-Learning-Modells zur Objektdetektion n gemäß der bevorzugten Ausführungsform der Erfindung.

Das System 1 umfasst eine erste
Trainingsberechnungseinheit 16, welche konfiguriert ist, ein auf Basis natürlichsprachlicher Daten vortrainiertes generatives Deep-Learning-Modell A, insbesondere ein vortrainiertes generatives Transformer-Modell bereitzustellen.

Des Weiteren umfasst das System 1 eine zweite Trainingsberechnungseinheit 18, welche konfiguriert ist, das generative Deep-Learning-Modell A unter Verwendung eines auf Sensordaten SD eines Fahrzeugumfeldes basierenden Trainingsdatensatzes TD von Einzelbildern 10 und/oder Punktwolken 12 nachzutrainieren.

Fig.4 zeigt eine schematische Darstellung eines Systems 2 zur Objektdetektion unter Verwendung eines generativen Deep-Learning-Modells gemäß der bevorzugten Ausführungsform der Erfindung.

Das System 2 umfasst eine Datenbereitstellungseinheit 20, welche konfiguriert ist, einen auf Sensordaten SD eines Fahrzeugumfeldes basierenden ersten Datensatz D1 umfassend eine Mehrzahl von Einzelbildern 10, insbesondere Zeitreihenbildern, und/oder Punktwolken 12 bereitzustellen.

Darüber hinaus umfasst das System eine Berechnungseinheit 22, welche konfiguriert ist, ein nach dem erfindungsgemäßen Verfahren trainiertes generatives Deep-Learning-Modell A, insbesondere ein generatives Transformer-Modell auf den ersten Datensatz D1 umfassend die Mehrzahl von Einzelbildern 10 und/oder Punktwolken 12 zur Objektdetektion anzuwenden.

Das System 2 umfasst ferner eine Datenausgabeeinheit 24, welche konfiguriert ist, einen, ein Ergebnis der Objektdetektion repräsentierenden, insbesondere annotierte Objekte in der Mehrzahl von Einzelbildern 10 und/oder Punktwolken 12 aufweisenden zweiten Datensatz D2 auszugeben.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: System
- 2: System
- 10: Einzelbilder
- 12: Punktwolken
- 16: erste Trainingsberechnungseinheit
- 18: zweite Trainingsberechnungseinheit
- 20: Datenbereitstellungseinheit
- 22: Berechnungseinheit
- 24: Ausgabeeinheit
- A: generatives Deep-Learning-Modell
- D1: erster Datensatz
- D2: zweiter Datensatz
- SD: Sensordaten
- TD: Trainingsdaten
- S1-S3: Verfahrensschritte
- S1`-S3`: Verfahrensschritte

## Patentansprüche

1. Computer-implementiertes Verfahren zum Bereitstellen eines generativen Deep-Learning-Modells (A) zur Objektdetektion, mit den Schritten:
Bereitstellen (S1) eines auf Basis natürlichsprachlicher Daten vortrainierten generativen Deep-Learning-Modells (A),
insbesondere eines vortrainierten generativen Transformer-Modells; und
Nachtrainieren (S2) des generativen Deep-Learning-Modells (A) unter Verwendung eines auf Sensordaten (SD) eines Fahrzeugumfeldes basierenden Trainingsdatensatzes (TD) von Einzelbildern (10), insbesondere Zeitreihenbildern und/oder Punktwolken (12).

2. Computer-implementiertes Verfahren nach Anspruch 1, wobei der Trainingsdatensatz (TD) Einzelbilder (10) und/oder Punktwolken (12) einer vorgegebenen Fahrsituation und/oder einer vorgegebenen Umweltbedingung des Fahrzeugumfeldes aufweist.

3. Computer-implementiertes Verfahren nach Anspruch 2, wobei die vorgegebene Fahrsituation ein urbanen Verkehrsumfeld, ein außerstädtisches Verkehrsumfeld und/oder eines Autobahn-Verkehrsumfeld umfasst und wobei die vorgegebene Umweltbedingung eine Uhrzeit, eine Wetterbedingung und/oder eine Fahrbahnbedingung umfasst.

4. Computer-implementiertes Verfahren nach einem der vorhergehenden Ansprüche, wobei der Trainingsdatensatz (TD) zum Nachtrainieren (S2) des generativen Deep-Learning-Modells (A) zwischen 50 und 500 Einzelbilder (10) und/oder Punktwolken (12), insbesondere zwischen 100 und 300 Einzelbilder (10) und/oder Punktwolken (12) aufweist.

5. Computer-implementiertes Verfahren nach einem der vorhergehenden Ansprüche, wobei der Trainingsdatensatz (TD) zum Nachtrainieren (S2) des generativen Deep-Learning-Modells (A) nicht annotierte Sensorrohdaten aufweist.

6. Computer-implementiertes Verfahren zur Objektdetektion unter Verwendung eines generativen Deep-Learning-Modells (A), mit den Schritten:
Bereitstellen (S1') eines auf Sensordaten (SD) eines Fahrzeugumfeldes basierenden ersten Datensatzes (D1) umfassend eine Mehrzahl von Einzelbildern (10), insbesondere Zeitreihenbildern und/oder Punktwolken (12);
Anwenden (S2') eines nach einem der Ansprüche 1 bis 5 trainierten generativen Deep-Learning-Modells (A), insbesondere eines generativen Transformer-Modells auf den ersten Datensatz (D1) umfassend die Mehrzahl von Einzelbildern (10) und/oder Punktwolken (12) zur Objektdetektion; und
Ausgeben (S3`) eines, ein Ergebnis der Objektdetektion repräsentierenden, insbesondere annotierte Objekte in der Mehrzahl von Einzelbildern (10) und/oder Punktwolken (12) aufweisenden zweiten Datensatzes (D2).

7. Computer-implementiertes Verfahren nach Anspruch 6, wobei das generative Deep-Learning-Modell (A) basierend auf der Mehrzahl bereitgestellter Einzelbilder (10) und/oder Punktwolken (12) eine Detektion von Fahrbahnmarkierungen, Verkehrszeichen und/oder Verkehrsteilnehmern durchführt.

8. Computer-implementiertes Verfahren nach Anspruch 7, wobei das generative Deep-Learning-Modell (A) eine Vorhersage einer Position der Fahrbahnmarkierungen, Verkehrszeichen und/oder Verkehrsteilnehmern für einen vorgegebenen, zukünftigen Zeitpunkt durchführt.

9. Computer-implementiertes Verfahren nach Anspruch 8, wobei der vorgegebene, zukünftige Zeitpunkt relativ zum Erfassungszeitpunkt des jeweiligen Einzelbildes und/oder der Punktwolke (12) des Fahrzeugumfeldes festgelegt ist.

10. Computer-implementiertes Verfahren nach einem der Ansprüche 6 bis 9, wobei das generative Deep-Learning-Modell (A) multimodale Eingabedaten, insbesondere Text- und Bilddaten, verarbeitet und multimodale Ausgabedaten, insbesondere Text- und/oder Bilddaten ausgibt.

11. Computer-implementiertes Verfahren zum Validieren einer automatisierten Fahrfunktion eines Kraftfahrzeugs unter Verwendung des Ergebnisses des computer-implementierten Verfahrens zur Objektdetektion nach einem der Ansprüche 6 bis 10.

12. System (1) zum Bereitstellen eines generativen Deep-Learning-Modells (A) zur Objektdetektion, umfassend:
eine erste Trainingsberechnungseinheit (16), welche konfiguriert ist, ein auf Basis natürlichsprachlicher Daten vortrainiertes generatives Deep-Learning-Modell (A), insbesondere ein vortrainiertes generatives Transformer-Modell bereitzustellen; und
eine zweite Trainingsberechnungseinheit (18), welche konfiguriert ist, das generative Deep-Learning-Modell (A) unter Verwendung eines auf Sensordaten (SD) eines Fahrzeugumfeldes basierenden Trainingsdatensatzes (TD) von Einzelbildern (10) und/oder Punktwolken (12) nachzutrainieren.

13. System (2) zur Objektdetektion unter Verwendung eines generativen Deep-Learning-Modells (A), umfassend:
eine Datenbereitstellungseinheit (20), welche konfiguriert ist, einen auf Sensordaten (SD) eines Fahrzeugumfeldes basierenden ersten Datensatz (D1) umfassend eine Mehrzahl von Einzelbildern (10), insbesondere Zeitreihenbildern, und/oder Punktwolken (12) bereitzustellen;
eine Berechnungseinheit (22), welche konfiguriert ist, ein nach einem der Ansprüche 1 bis 5 trainiertes generatives Deep-Learning-Modell (A), insbesondere ein generatives Transformer-Modell auf den ersten Datensatz (D1) umfassend die Mehrzahl von Einzelbildern (10) und/oder Punktwolken (12) zur Objektdetektion anzuwenden; und
einer Datenausgabeeinheit (24), welche konfiguriert ist, einen, ein Ergebnis der Objektdetektion repräsentierenden, insbesondere annotierte Objekte in der Mehrzahl von Einzelbildern (10) und/oder Punktwolken (12) aufweisenden zweiten Datensatz (D2) auszugeben.

14. Computerprogrammprodukt mit einem Computerprogramm, das Softwaremittel zur Durchführung eines der Verfahren nach einem der Ansprüche 1 bis 5 und 6 bis 10 umfasst, wobei das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 5 und 6 bis 10 auszuführen, wenn das Computerprogramm auf einem Computer ausgeführt wird.
